# EUROPÄISCHE PATENTSCHRIFT

(11) **EP 0 994 637 B1**
(45) Veröffentlichungstag und Bekanntmachung des Hinweises auf die Patenterteilung: **14.12.2005**
(21) Anmeldenummer: 99118618.0
(22) Anmeldetag: 21.09.1999
(51) Int. Cl.: H05H 1/48

(54) **Verfahren und Vorrichtung zur Plasmabehandlung von stab- oder fadenförmigem Material**
Method and device for plasma treatment of bar or wire shaped material
Procédé et dispositif de traitement par plasma d'un matériel sous forme de barre ou de fil

(30) Priorität: 16.10.1998 DE 19847774
(43) Veröffentlichungstag der Anmeldung: 19.04.2000
(73) Patentinhaber: Förnsel, Peter, 32139 Spenge (DE); Buske, Christian, 33803 Steinhagen (DE)
(72) Erfinder: Förnsel, Peter, 32139 Spenge (DE); Buske, Christian, 33803 Steinhagen (DE)
(74) Vertreter: Cohausz & Florack

(56) Entgegenhaltungen:
- DE-A- 1 919 052
- FR-A- 1 350 055
- US-A- 5 354 963

## Beschreibung

Die Erfindung betrifft ein Verfahren und eine Vorrichtung zur Plasmabehandlung von stab- oder fadenförmigem Material.

Bei zahlreichen Materialien, insbesondere bei Kunststoffen, ist die Oberfläche nicht oder nur schwer mit Flüssigkeit benetzbar. Wenn solche Materialien, bedruckt, lackiert oder mit einer Klebeschicht versehen werden sollen, ist deshalb generell eine Vorbehandlung der Oberfläche erforderlich.

Ein herkömmliches Verfahren, die Benetzbarkeit von Kunststoffoberflächen zu erhöhen, besteht darin, dass man die Oberfläche einer Coronaentladung aussetzt. In EP-A2-0 761 415 wird dagegen ein Verfahren beschrieben, bei dem die Vorbehandlung nicht mittels Coronaentladung, sondern mit Hilfe eines Niedrigtemperaturplasmas unter Atmosphärendruck erfolgt. Eine Plasmadüse zur Durchführung dieses Verfahrens wird ebenfalls in der genannten Veröffentlichung beschrieben. Bei der Vorbehandlung wird die Plasmadüse auf die zu behandelnde Oberfläche gerichtet, so dass der Plasmastrahl die Oberfläche wie ein Pinsel überstreicht.

FR-1 350 055 offenbart ein Verfahren und eine Vorrichung zur Plasmabehandlung gemäß dem Oberbegriff von Anspruch 1 und 7.

Aus der DE 1919052 A1 ist ein Verfahren zur Vorwärmung eines Drahtes mittels Beaufschlagung durch einen Lichtbogen bekannt, bei dem der Draht durch eine düsenförmige Kammer eines Gehäuses hindurchgeführt wird.

Bei den zu behandelnden Materialien kann es sich auch um stab- oder fadenförmige Materialien handeln, beispielsweise um Kunstfasern, Garne, Fäden, Drähte, kunststoffbeschichtete Kabel, Glasfasern und dergleichen.

Aufgabe der Erfindung ist es, ein Verfahren und eine Vorrichtung anzugeben, die eine besonders effiziente Plasmabehandlung solcher stab- oder fadenförmiger Materialien ermöglichen.

Diese Aufgabe wird mit den in den unabhängigen Patentansprüchen angegebenen Merkmalen gelöst.

Das erfindungsgemäße Verfahren ist dadurch gekennzeichnet, dass in einer Plasmadüse ein Lichtbogen zwischen einem eine Außenelektrode bildenden Düsenrohr und einer Koaxial in dem Düsenrohr angeordneten Innenelektrode erzeugt wird, dass mit Hilfe des Lichtbogens ein Plasmastrahl erzeugt wird und dass das Material zum Beaufschlagen mit dem Plasmastrahl durch einen koaxial in der Innenelektrode ausgebildeten Kanal durch die Plasmadüse hindurch geführt wird.

Die Plasmadüse, die einen wesentlichen Teil der Vorrichtung zur Durchführung des Verfahrens bildet, weist generell ein Düsenrohr auf, das von einem Arbeitsgas durchströmt wird und zumindest am auslaßseitigen Ende eine ring- oder rohrförmige Außenelektrode bildet. Eine bevorzugt stiftförmige Innenelektrode ist koaxial im Inneren des Düsenrohres angeordnet. Das Plasma wird durch eine elektrische Entladung zwischen den Innen- und Außenelektroden erzeugt. Hierzu wird an die Elektroden eine Hochspannung, vorzugsweise eine hochfrequente Wechselspannung angelegt. Ein für die Erzeugung dieser Spannung geeigneter Generator wird in DE-C-42 35 766 beschrieben.

Bei der erfindungsgemäßen Vorrichtung weist die Innenelektrode der Plasmadüse einen koaxialen Kanal auf, durch den das zu behandelnde Material, im folgenden kurz als Faser bezeichnet, hindurchläuft. Die Faser läuft folglich mittig und koaxial durch die aus der Plasmadüse austretende Plasmaflamme und kann so in einem einzigen Arbeitsgang gleichmäßig auf der gesamten Umfangsfläche behandelt werden.

Vorteilhafte Ausgestaltungen der Erfindung ergeben sich aus den Unteransprüchen.

Das Verfahren eignet sich auch zur Plasmapolymerisation des Materials sowie zur Plasmabeschichtung. Im letzteren Fall wird das Beschichtungsmaterial in gasförmigem Zustand mit dem Arbeitsgas oder über gesonderte Düsen an geeigneter Stelle zugeführt.

Vorzugsweise wird das Arbeitsgas im Düsenrohr verdrallt. Dadurch wird auch eine Verdrallung der aus der Plasmadüse austretenden Plasmaflamme erreicht, so daß das Plasma die Faser wirbelförmig umströmt und dadurch in enge Berührung mit der Oberfläche der Faser kommt.

Zumindest in den Fällen, in denen das zu behandelnde Material nicht elektrisch leitend ist, kann sich die Faser auf einer wesentlichen Länge frei durch das Düsenrohr erstrecken. Durch die Verdrallung des Arbeitsgases entsteht in dem Düsenrohr ein Wirbel, und der Lichtbogen der elektrischen Entladung wird innerhalb des Düsenrohres in dem Wirbelkern dieses Wirbels kanalisiert, so daß er sich erst am Auslaß der Düse zu der umgebenden Außenelektrode auffächert. Wenn das Düsenrohr von der Faser durchlaufen wird, windet sich der so kanalisierte Lichtbogen schraubenförmig um die Faser, jedoch ohne diesen zu berühren. Auf diese Weise läßt sich auch eine thermische Behandlung der Oberfläche der Faser erreichen, deren Intensität durch Steuerung der Verdrallung des Arbeitsgases und/oder durch Zufuhr von Sekundärgas kontrolliert werden kann.

Bei bestimmten Materialien, insbesondere Materialien mit einer relativ rauhen Oberfläche wie beispielsweise Stapelfasern kann Falschluft mitgerissen werden, wenn sich die Faser mit hoher Geschwindigkeit durch den Kanal der Innenelektrode bewegt. Dieser Effekt, durch den unter Umständen die Wirkung des Plasmas oder die thermische Wirkung beeinträchtigt werden kann, läßt sich dadurch vermeiden oder mindern, daß in dem Kanal der Innenelektrode ein Unterdruck erzeugt wird.

Im folgenden werden Ausführungsbeispiele der Erfindung anhand der Zeichnungen näher erläutert.

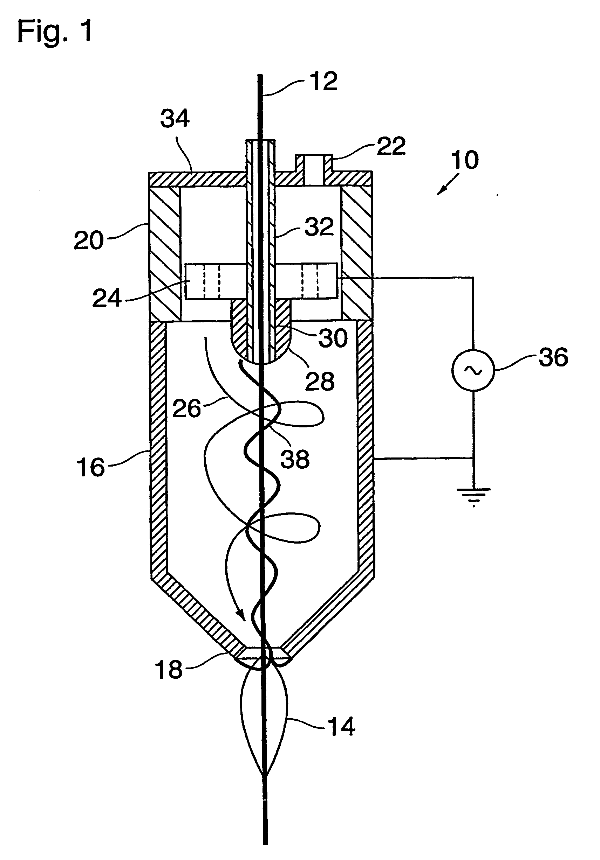

- Figuren 1 bis 3: zeigen Prinzipskizzen von Vorrichtungen zur Durchführung des erfindungsgemäßen Verfahrens gemäß unterschiedlichen Ausführungsbeispielen

In Figur 1 ist eine Plasmadüse 10 gezeigt, die den wesentlichen Teil einer Vorrichtung zur Plasmabehandlung einer Faser 12 bildet. Die Faser 12 kann beispielsweise direkt von einer Spinnmaschine kommen oder von einer nicht gezeigten Spule abgezogen werden und wird beispielsweise mit einer Geschwindigkeit zwischen 0,05 und 25 m/s, vorzugsweise zwischen 5 und 25 m/s koaxial durch die Plasmadüse 10 hindurchgezogen. Sie läuft dabei durch ein aus der Plasmadüse 10 austretendes Freiplasma 14 und wird durch die Wirkung dieses Plasmas gleichmäßig auf ihrem gesamten Umfang vorbehandelt, beispielsweise um die Benetzbarkeit mit Flüssigkeiten zu erhöhen.

Die Plasmadüse 10 weist ein Düsenrohr 16 aus elektrisch leitendem Material auf, das zugleich eine Außenelektrode bildet und sich zu einem Auslaß 18 hin verjüngt. An das Düsenrohr 16 schließt sich stromaufwärts ein Keramikrohr 20 an, in das über einen Einlaß 22 ein Arbeitsgas, beispielsweise Luft unter Druck einleitbar ist. Im Inneren des Keramikrohres 20 ist eine Dralleinrichtung 24 angeordnet, die im wesentlichen durch eine Scheibe aus Metall gebildet wird, die mit schraubenförmig verlaufenden Bohrungen versehen ist. Durch die Dralleinrichtung 24 wird die eingeleitete Druckluft derart verdrallt, daß sie innerhalb des Düsenrohres 16 einen Wirbel 26 um die durchlaufende Faser 12 herum bildet. Eine stiftförmige Innenelektrode 28 ist elektrisch mit der Dralleinrichtung 24 verbunden und ragt in das Innere des Düsenrohres 16. Die Innenelektrode 28 weist einen durchgehenden axialen Kanal 30 auf, in den ein Führungsrohr 32 aus Keramik eingesetzt ist. Das Führungsrohr 32 erstreckt sich durch die Dralleinrichtung 24 sowie durch eine den Einlaß 22 bildende Abschlußwand 34 der Plasmadüse und wird von der Faser 12 durchlaufen.

Im gezeigten Beispiel ist das Düsenrohr 16 geerdet, und an die Innenelektrode 28 wird mit Hilfe eines Hochfrequenzgenerators 36 eine Spannung angelegt. Beim Einschalten der Spannung entsteht zunächst eine Coronaentladung, durch die dann eine Bogenentladung gezündet wird. Der so entstehende Lichtbogen 38 wird durch die wirbelförmige Luftströmung mitgerissen und daran gehindert, direkt zur Außenelektrode überzuschlagen. So folgt der Lichtbogen 38 dem Kern des Wirbels 26. Wenn die Faser 12 nicht vorhanden wäre, würden der Wirbelkern und der Lichtbogen auf der Achse des Düsenrohres verlaufen. Da die wirbelförmige Strömung jedoch durch die Faser 12 gestört wird, windet sich der Lichtbogen schraubenförmig um die Faser 12. Durch die intensive Wärmestrahlung, die von dem Lichtbogen 38 ausgeht, kann so die Oberfläche der Faser 12 thermisch behandelt oder vorbehandelt werden.

Erst am Auslaß 18 des Düsenrohres fächert sich der Lichtbogen 38 auf mehrere Äste auf die radial zur Außenelektrode verlaufen und dabei aufgrund der Verdrallung des Luftstromes um die Düsenachse rotieren. Im Bereich des Auslasses 18 bildet sich ein hochreaktives Heißplasma, das bei Verwendung von Luft als Arbeitsgas anhand einer blauvioletten Leuchterscheinung zu erkennen ist. Dieses Heißplasma bewirkt eine Aktivierung der Oberfläche der Faser 12, deren Wirkung durch die vorangehende thermische Vorbehandlung der Faser noch verstärkt wird.

Schließlich durchläuft die Faser das Freiplasma 14, das sich aufgrund der Verdrallung eng um die Faser schließt. In dieser Freiplasmazone findet die eigentliche Plasmabehandlung durch chemisch/physikalische Modifikation des Materials statt. Durch die konische Form des Düsenrohres und aufgrund einer Volumenausdehnung durch die Entstehung angeregten Plasmas wird das Plasma beschleunigt, so daß eine langgestreckte Plasmaflamme und eine entsprechend intensive Behandlung der Faser 12 erreicht wird.

Bei gegebener Konfiguration der Plasmadüse 10 kann die Wirkung und Intensität der Behandlung durch Verändern der folgenden Parameter optimiert und an die Materialbeschaffenheit der Faser 12 und den jeweiligen Anwendungszweck angepaßt werden: Durchlaufgeschwindigkeit der Faser, Durchsatz und chemische Zusammensetzung des Arbeitsgases, Spannung und Amplitude der Hochspannung.

Darüber hinaus lassen sich spezielle Effekte durch Änderung der Düsenkonfiguration und/oder durch geeignete Einbauten erzielen.

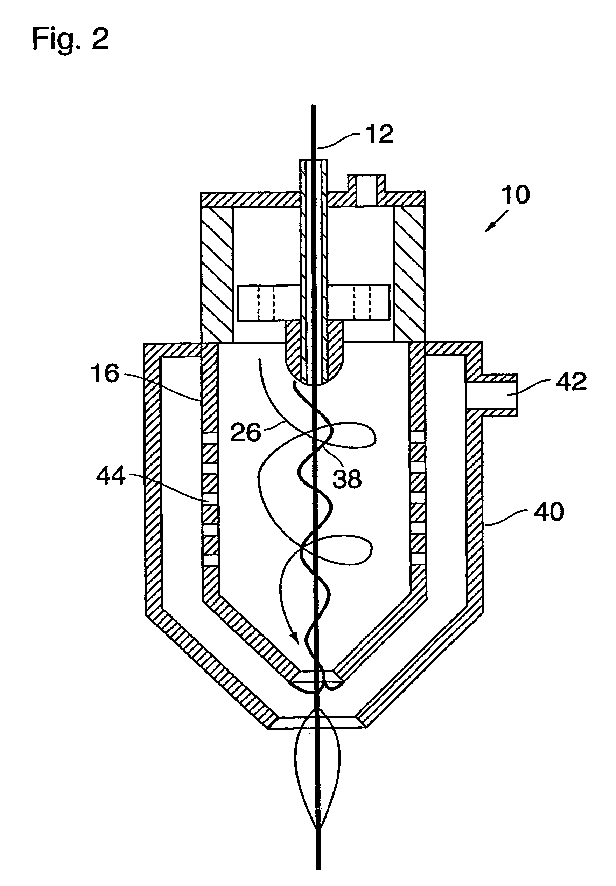

Figur 2 zeigt ein Ausführungsbeispiel, bei dem das Düsenrohr 16 von einem Außenmantel 40 umgeben ist, der sich gleichfalls zum Auslaß hin verjüngt. Über einen Einlaß 42 wird Sekundärgas, beispielsweise Luft, in den Außenmantel zugeführt. Der Durchsatz des Sekundärgases bildet dann einen weiteren Parameter, mit dem die Geometrie des Plasmas beeinflußt werden kann. Das Sekundärgas kann ggf. auch gleichsinnig oder gegensinnig zu dem primären Arbeitsgas verdrallt werden und bewirkt zugleich eine Kühlung des Düsenrohres 16. Gegebenenfalls kann durch geeignete chemische Zusammensetzung des Sekundärgases auch eine chemische Behandlung oder Beschichtung der Faser 12 erreicht werden.

Da sich der Querschnitt des Außenmantels 40 zum Auslaß hin verjüngt, tritt ein Teil des Sekundärgases über radiale Durchbrüche 44 in das Innere des Düsenrohres 16 ein. Hierdurch wird eine Einschnürung des Wirbels 26 im Inneren des Düsenrohres 16 erreicht, mit der Folge, daß sich auch der Lichtbogen 28 enger um die Faser 12 windet. So kann mit Hilfe des Sekundärluftdurchsatzes der Effekt der thermischen Vorbehandlung durch den Lichtbogen 38 gezielt gesteuert werden.

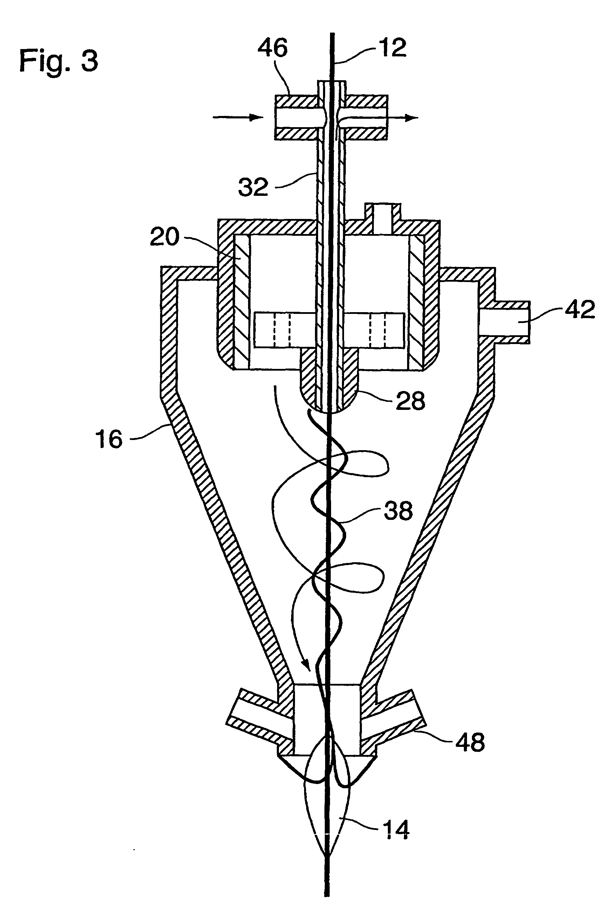

Ein vergleichbarer Effekt läßt sich auch mit der Anordnung nach Figur 3 erzielen, bei der das Düsenrohr 16 einen längeren konischen Abschnitt aufweist und in seinem oberen zylindrischen Teil, der das Keramikrohr 20 umgibt, einen Einlaß 42 aufweist, durch den Sekundärgas verdrallt oder unverdrallt direkt in das Düsenrohr zugeführt werden kann.

Das Führungsrohr 32 ist bei diesem Ausführungsbeispiel stromaufwärts der Plasmadüse 10 mit einer Querleitung 46 verbunden, die von Druckluft mit hoher Geschwindigkeit durchströmt wird. Auf diese Weise wird in dem von der Faser 12 durchlaufenen Kanal des Führungsrohres 32 nach dem Strahlpumpenprinzip ein Unterdruck erzeugt. In dem Abschnitt des Führungsrohres 32 zwischen der Querleitung 46 und der Mündung in der Innenelektrode 28 bildet sich so eine Luftströmung aus, die aufwärts, also der Bewegungsrichtung der Faser 12 entgegen gerichtet ist. Durch diese Maßnahme wird der durch die schnell durchlaufende Faser 12 verursachte Mitreißeffekt gemildert oder unterdrückt, der andernfalls dazu führen würde, daß die von der Faser durch das Führungsrohr hindurch mitgerissene Luft die Strömungsverhältnisse im Düsenrohr 16 ungünstig beeinflußt.

In Figur 3 ist darüber hinaus eine Möglichkeit zur Zufuhr eines Beschichtungsgases zur Plasmabeschichtung der Faser 12 illustriert. Zu diesem Zweck weist das Düsenrohr 16 im Bereich seines Auslasses einen oder mehrere Zuführungen 48 auf, durch die das Beschichtungsgas direkt in die Heißplasmazone zugeführt wird.

Bei anderen Ausführungsformen kann die Zufuhr des Beschichtungsgases auch in das Freiplasma 14 erfolgen. Ebenso ist es möglich, das Beschichtungsgas dem Primärgas oder dem Sekundärgas zuzusetzen. Wenn auf die Erzeugung eines Unterdruckes in dem Führungsrohr 32 verzichtet wird, könnte das Beschichtungsgas auch über dieses Führungsrohr zugeführt werden.

Falls die Faser 12 aus elektrisch leitendem Material besteht oder elektrisch leitend beschichtet wird, muß verhindert werden, daß der Lichtbogen 38 direkt auf die Faser überschlägt. Sofern die Faser 12 auf Erdpotential liegt, läßt sich dies etwa dadurch erreichen, daß die Innenelektrode 28 geerdet wird und stattdessen die Spannung an das Düsenrohr 16 angelegt wird und/oder das Führungsrohr 32 über die Innenelektrode 28 hinaus bis in die Heißplasmazone oder gar in das Freiplasma 14 verlängert wird.

Das beschriebene Verfahren eignet sich zur Plasmabehandlung und/oder thermischen Behandlung von stab- oder fadenförmigen Materialien, die vorzugsweise einen runden oder annähernd runden Querschnitt aufweisen sollten. Der Durchmesser des behandelnden Materials kann bei entsprechender Konfiguration der Plasmadüse beispielsweise in der Größenordnung von 0,1 bis 10 mm liegen.

## Patentansprüche

1. Verfahren zur Plasmabehandlung von stab- oder fadenförmigem Material (12), bei dem in einer Plasmadüse (10) ein Lichtbogen (38) zwischen einem eine Außenelektrode bildenden Düsenrohr (16) und einer Koaxial in dem Düsenrohr angeordneten Innenelektrode (28) erzeugt wird,
wobei
mit Hilfe des Lichtbogens (38) ein Plasmastrahl erzeugt wird, **dadurch gekennzeichnet, dass** das Material (12) zum Beaufschlagen mit dem Plasmastrahl durch einen koaxial in der Innenelektrode ausgebildeten Kanal (30) durch die Plasmadüse (10) hindurch geführt wird.

2. Verfahren nach Anspruch 1 ,
**dadurch gekennzeichnet,**
**dass** ein Beschichtungsgas in die Plasmadüse (10) oder das von ihr erzeugte Plasma (14) zugeführt wird.

3. Verfahren nach einem der Ansprüche 1 oder 2,
**dadurch gekennzeichnet,**
**dass** ein Arbeitgas in der Plasmadüse (10) verdrallt wird.

4. Verfahren nach Anspruch 3,
**dadurch gekennzeichnet,**
**dass** am äußeren Umfang der drallförmigen Strömung des Arbeitsgases ein Sekundärgas in die Plasmadüse (10) zugeführt wird.

5. Verfahren nach Anspruch 3 oder 4,
**dadurch gekennzeichnet,**
**dass** der Lichtbogen (38) durch die Verdrallung des Arbeitsgases schraubenförmig um das durchlaufende Material (12) gewunden wird.

6. Verfahren nach einem der Ansprüche 1 bis 5,
**dadurch gekennzeichnet,**
**dass** das Material (12) über ein Führungsrohr (32) in die Plasmadüse (10) eingeleitet wird und dass im Inneren des Führungsrohres (32) einen Unterdruck erzeugt wird.

7. Vorrichtung zur Plasmabehandlung von stab- oder fadenförmigem Material (12),
mit einer Plasmadüse (10), die ein eine Außenelektrode bildendes Düsenrohr (16) und eine koaxial in dem Düsenrohr angeordnete Innenelektrode (28) aufweist,
**dadurch gekennzeichnet,**
**dass** ein koaxial in der Innenelektrode (28) ausgebildeter Kanal (30) zum Hindurchführen des Materials (12) vorgesehen ist.

8. Vorrichtung nach Anspruch 7,
**dadurch gekennzeichnet,**
**dass** ein von außen in die Plasmadüse (10) eintretendes und mindestens bis in den Kanal (30) der Innenelektrode (28) reichendes Führungsrohr (32) für das Material (12) vorgesehen ist.

9. Vorrichtung nach Anspruch 8,
**dadurch gekennzeichnet,**
**dass** das Führungsrohr (32) aus elektrisch isolierendem Material besteht.

10. Vorrichtung nach einem der Ansprüche 7 bis 9,
**dadurch gekennzeichnet**
**dass** eine Dralleinrichtung (24) zur Erzeugung einer drallförmigen Strömung eines Arbeitsgases in dem Düsenrohr (16) vorgesehen ist.

## Claims

1. A method for plasma treatment of rod- or thread-like material (12),
wherein an electric arc (38) is created in a plasma nozzle (10) between a nozzle pipe (16) which forms an outer electrode and an inner electrode (28) disposed coaxially in said nozzle pipe,
wherein a plasma jet is created by means of said electric arc (38),
**characterized in that**,
said material (12) is passed through a passage (30) formed coaxially in said inner electrode of said plasma nozzle (10) in order to be impinged by said plasma jet.

2. Method as claimed in claim 1,
**characterized in that**,
a coating gas is supplied into the plasma nozzle (10) or into the plasma (14) generated thereby.

3. Method as claimed in claim 1 or 2,
**characterized in that**,
a swirling motion is imparted to a working gas supplied to the plasma nozzle (10).

4. Method as claimed in claim 3,
**characterized in that**,
a secondary gas is supplied into the plasma nozzle (10) in the outer circumferential region of the swirling flow of said working gas.

5. Method as claimed in claim 3 or 4,
**characterized in that**,
a said electric arc (38) is channelled by the swirling motion of the working gas such that the arc winds helically around the material (12) passing through the plasma nozzle.

6. Method as claimed in one of the claims 1 to 5,
**characterized in that**,
said material (12) is inserted via a guide tube (32) in the plasma nozzle (10) and that a vacuum is created in said guide tube (32).

7. Apparatus for plasma treatment of rod- or thread-like material (12), having a plasma nozzle (10), comprising nozzle pipe (16) which forms an outer electrode and an inner electrode (28) disposed coaxially in said nozzle pipe,
**characterized in that**,
said inner electrode (28) has coaxially formed therein a passage (30) through which said material (12) can be passed.

8. Apparatus as claimed in claim 7,
**characterized in that**,
a guide tube for guiding said material (12) is provided, said guide tube (32) entering into the plasma nozzle (10) from outside and extending at least into said passage (30) in the inner electrode (28).

9. Apparatus as claimed in claim 8,
**characterized in that**,
said guide tube (32) is made of electrically insulating material.

10. Apparatus as claimed in one of the claims 7 to 9,
**characterized in that**,
a swirl system (24) for generating a swirling motion of a working gas within said nozzle pipe (16).

## Revendications

1. Procédé de traitement par plasma d'un matériau en forme de barre ou de fil (12), selon lequel dans une buse à plasma (10), on produit un arc électrique entre un tube de buse (16) qui forme une électrode extérieure, et une électrode intérieure (28) disposée coaxialement dans le tube de buse, selon lequel un jet de plasma est produit à l'aide de l'arc électrique (38),
**caractérisé en ce que** le matériau (12) destiné à être atteint par le jet de plasma est guidé dans un canal (30) formé coaxialement dans l'électrode intérieure, à travers la buse à plasma (10).

2. Procédé selon la revendication 1, **caractérisé en ce qu'**un gaz de revêtement est envoyé dans la buse à plasma (10) ou dans le plasma (14) produit par cette buse.

3. Procédé selon l'une des revendications 1 ou 2, **caractérisé en ce qu'**un gaz de travail est amené à tourbillonner dans la buse à plasma (10).

4. Procédé selon la revendication 3, **caractérisé en ce que** le gaz secondaire est envoyé dans la buse à plasma (10) sur la périphérie extérieure de l'écoulement de forme tourbillonnaire du gaz de travail.

5. Procédé selon la revendication 3 ou 4, **caractérisé en ce que** l'arc électrique (38) s'enroule en hélice autour du matériau traversant (12), sous l'effet du tourbillonnement du gaz de travail.

6. Procédé selon l'une des revendications 1 à 5, **caractérisé en ce que** le matériau (12) est introduit dans la buse à plasma (10) par l'intermédiaire d'un tube de guidage (32) et qu'une dépression est produite à l'intérieur du tube de guidage (32).

7. Dispositif pour le traitement par plasma d'un matériau en forme de barre ou de fil (12),
comprenant une buse à plasma (10), qui possède un tube de buse (16) formant une électrode extérieure, et une électrode intérieure (28) disposée coaxialement dans le tube de buse, **caractérisé en ce qu'**un canal (30) disposé coaxialement dans l'électrode intérieure (28) est prévu pour le passage du matériau (12).

8. Dispositif selon la revendication 7, **caractérisé en ce qu'**il est prévu un tube de guidage (32), qui pénètre dans la buse à plasma (10) et s'étend au moins jusque dans le canal (30) de l'électrode intérieure (28), pour le matériau (12).

9. Dispositif selon la revendication 8, **caractérisé en ce que** le tube de guidage (32) est formé d'un matériau électriquement isolant.

10. Dispositif selon l'une des revendications 7 à 9, **caractérisé en ce qu'**un dispositif de tourbillonnement (24) est prévu pour la production d'un écoulement de forme tourbillonnaire d'un gaz de travail dans le tube de buse (16).
